# EUROPEAN PATENT SPECIFICATION

(11) **EP 3 068 150 B1**
(45) Date of publication and mention of the grant of the patent: **23.09.2020**
(21) Application number: 13899306.8
(22) Date of filing: 10.12.2013
(51) Int. Cl.: H04W 4/02, H04W 4/021, H04L 12/28, H04W 4/00, H04W 4/80

(54) **METHOD AND DEVICE FOR CONTROLLING DEVICE**
VERFAHREN UND VORRICHTUNG ZUR STEUERUNG EINER VORRICHTUNG
PROCÉDÉ ET DISPOSITIF POUR COMMANDER UN DISPOSITIF

(43) Date of publication of application: 14.09.2016
(60) Divisional application: 20184881.9
(73) Proprietor: Huawei Technologies Co., Ltd., Longgang District Shenzhen, Guangdong 518129 (CN)
(72) Inventor: LI, Zijun, Shenzhen Guangdong 518129 (CN); LI, Guoliang, Shenzhen Guangdong 518129 (CN)
(74) Representative: Goddar, Heinz J.
(86) International application number: PCT/CN2013/088987
(87) International publication number: WO 2015/085487

(56) References cited:
- EP-A1- 1 612 999
- CN-A- 102 006 362
- CN-A- 102 038 470
- CN-A- 102 057 757
- CN-A- 102 595 592
- CN-A- 103 200 378
- US-A1- 2006 274 669
- US-A1- 2011 258 313
- US-A1- 2011 309 933
- US-A1- 2012 295 635
- US-A1- 2013 024 018

## Description

### TECHNICAL FIELD

The present invention relates to the field of communications, and in particular, to a device control method and a device.

### BACKGROUND

With rapid development of technologies, an increasing number of controlled devices (such as, an intelligent television, an intelligent acoustic device, intelligent lighting, and the like) occur in people's daily life. In order to control these controlled devices, users need to use dedicated controllers, or install dedicated applications on mobile terminals, so as to control the controlled devices to start, stop, or execute specific functions.

In the prior art, users manually select required controlled devices to provide services. Specifically, the users may implement, by operating a mobile terminal, sharing of multi-media content (such as, images, audio, videos, and the like) between devices. For example, the users may transmit audio to an acoustic device by operating a music playback program on a mobile phone, and enable the acoustic device to play the audio.

However, when the controlled devices are distributed in multiple rooms, after a user moves to a new room, if the user wants to continue enjoying a service of a controlled device in the new room, the user needs to re-select, on the mobile terminal, a controlled device located in the new room to provide the service. For example, the user plays music by using an acoustic device in the living room, and when the user walks from the living room to another room, if the user wants to continue listening to music in this room, the user needs to select, by operating the mobile terminal, an acoustic device located in this room to play music. In this way, the user needs to re-select, by using the mobile terminal, a new acoustic device to play music, which increases complexity of operations of the user and decreases user experience.

EP 1 612 999 A1 discloses a system and method in a wireless (Wi-Fi) network comprising a Server, clients and various mechanisms that compute llists of other clients and resources that are physically nearby. Clients report Wi-Fi access points' signal strengths to a Server, which uses that data to compute the proximity of resources to one another, including an estimate the distance between resources, The data may be returned to the client as a list of resources within short range proximity, or resources within long-range proximity, with an approximate time to that resource based on previous clients' reporting. Because proximity is used rather than absolute location, only minimal setup is needed. As the number of clients and resources that use the system increases, the Server knowledge also increases with respect to the number of resources that can be found and in the physical range over which other people and places can be found.

US 2006/274669 A1 discloses a searching apparatus in a wireless network with at least three base stations that is put in the position of identifying the available apparatuses and services which are in its proximity, in that the apparatuses Gᵢ ≠ k) determine the signal strengths ss(i,j) at which they receive signals from the base stations Bᵢ, and the apparatuses to be discovered send these signals to a searching apparatus Gₖ.

US 2013/024018 A1 discloses a multimedia control method, which includes the following steps. Communicate a mobile device with at least one audio device. Determine at least one relative location between the mobile device and at least one of the audio device. Control the at least one audio device according to the at least one relative location.
US2011/309933 A1 discloses a computer, media player, remote control or other device which is configured to determine its relative location within a home, office or other given environment based upon the reception and/or sensing of wireless network signals and/or other electromagnetic signals emitted by other devices present at any time in the environment. The device receives wireless signals from one or more wireless signal sources, and determines a parameter (e.g., signal strength) for the signals received from each source. The location of the portable device within the environment is determined based on the determined parameters. The location may be used for any purpose, such as adjusting a setting on the portable device, identifying another device to be controlled by a portable remote control, or the like.

### SUMMARY

The present invention provides a device control method of claim 1, a terminal of claims 4 and 8, and a system of claim 7, so that a controlled device senses movement of a terminal, thereby improving user experience. Possible implementation manners of the invention are disclosed in the dependent claims. In the following, any embodiments not following under the scope of the claims shall be considered not to be part of the invention which is defined by the claims.

By using the foregoing solutions, a terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a device control method according to an embodiment of the present invention;
FIG. 2 is a schematic flowchart of another device control method according to an embodiment of the present invention;
FIG. 3 is a flowchart of a device control method according to an embodiment of the present invention;
FIG. 4 is a flowchart of another device control method according to an embodiment of the present invention;
FIG. 5 is a schematic structural diagram of a terminal according to an embodiment of the present invention;
FIG. 6 is a schematic structural diagram of another terminal according to an embodiment of the present invention;
FIG. 7 is a connection diagram of a device control system according to an embodiment of the present invention;
FIG. 8 is a connection diagram of another device control system according to an embodiment of the present invention;
FIG. 9 is a schematic structural diagram of another terminal according to an embodiment of the present invention; and
FIG. 10 is a schematic structural diagram of still another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

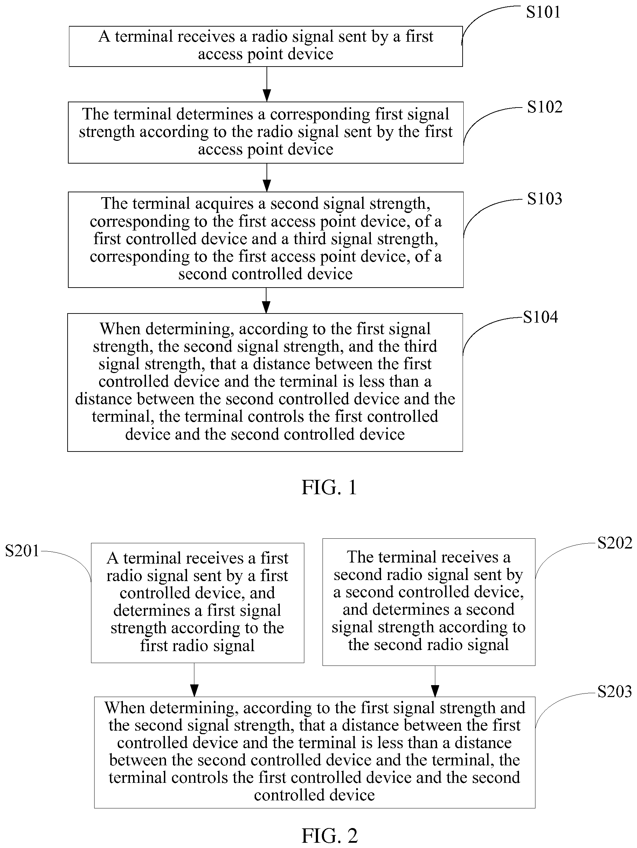

An embodiment of the present invention provides a device control method. As shown in FIG. 1, the method is executed by a terminal, and the method includes:
S101: A terminal receives a radio signal sent by a first access point device.

The first access point device includes at least one first access point device.

Specifically, the terminal and a controlled device are connected by using an access point device, where the access point device includes a working access point device used for implementing network communication between the terminal and the controlled device and at least two auxiliary access point devices used for providing a radio signal to determine a distance between the terminal and the controlled device. The working access point device may also be used as an auxiliary access point device, and when determining a signal strength, the working access point device is used as an auxiliary access point device. This embodiment of the present invention is described by collectively referring to the working access point device and the auxiliary access point device as access point devices.

S102: The terminal determines a corresponding first signal strength according to the radio signal sent by the first access point device.

The first signal strength includes at least one first signal strength.

Specifically, the first access point device includes at least three access point devices, and the terminal receives at least three radio signals sent by the at least three access point devices, and obtains at least three first signal strengths according to the at least three radio signals.

Exemplarily, the terminal determines a signal strength A1 according to a received radio signal sent by an access point device 1, determines a signal strength A2 according to a received radio signal sent by an access point device 2, and determines a signal strength A3 according to a radio signal sent by an access point device 3.

S103: The terminal acquires a second signal strength, corresponding to the first access point device, of a first controlled device and a third signal strength, corresponding to the first access point device, of a second controlled device.

The second signal strength includes at least one second signal strength, and the third signal strength includes at least one third signal strength.

Specifically, the terminal sends a signal strength request instruction to the first controlled device and the second controlled device, to instruct the first controlled device and the second controlled device to respectively send the second signal strength and the third signal strength to the terminal according to the signal strength request instruction.

The second signal strength includes at least three signal strengths obtained when the first controlled device receives the radio signals of the at least three first access point devices, and the third signal strength includes at least three signal strengths obtained when the second controlled device receives the radio signals of the at least three first access point devices.

Specifically, the terminal may send the signal strength request instruction in a broadcast manner; after receiving the signal strength request instruction, the first controlled device sends at least three second signal strengths corresponding to the at least three first access point devices and identifier information of the first controlled device to the terminal; and after receiving the signal strength request instruction, the second controlled device sends at least three third signal strengths corresponding to the at least three first access point devices and identifier information of the second controlled device to the terminal. In this way, the terminal can determine, according to the identifier information, a sending party corresponding to the received signal strength. Certainly, the terminal may also directly send the signal strength request instruction to the first controlled device and the second controlled device; after receiving the signal strength request instruction, the first controlled device sends at least three second signal strengths corresponding to the at least three first access point devices to the terminal; and after receiving the signal strength request instruction, the second controlled device sends at least three third signal strengths corresponding to the at least three first access point devices to the terminal, which is not limited in the present invention.

It should be noted that, because the first controlled device and the second controlled device send signal strengths corresponding to multiple access point devices to the terminal, when sending the signal strengths to the terminal, the first controlled device and the second controlled device also need to send an identifier of an access point device corresponding to each signal strength to the terminal, so as to notify the terminal of an access point device corresponding to the received signal strength.

Optionally, the terminal sends the signal strength request instruction to the first controlled device and the second controlled device, and acquires the second signal strength, corresponding to the first access point device, of the first controlled device and the third signal strength, corresponding to the first access point device, of the second controlled device in the following two manners:

Manner 1: the terminal sends a signal strength request instruction including an identifier of the first access point device to the first controlled device and the second controlled device, to instruct the first controlled device and the second controlled device to respectively send the second signal strength and the third signal strength that correspond to the first access point device to the terminal according to the identifier.

Specifically, the access point device may be a Wi-Fi (WirelessFidel, wireless fidelity protocol) access point (English: Access Point, AP for short), and an identifier of the access point device may be a service set identifier (English: Service Set Identifier, SSID for short) of the Wi-Fi access point. The terminal may send a signal strength request instruction including the service set identifier to the first controlled device and the second controlled device, to instruct the first controlled device and the second controlled device to determine to send to the terminal the signal strength that is determined according to a radio signal sent by a Wi-Fi access point corresponding to the service set identifier. In this way, the terminal can send a signal request instruction including the service set identifier of a Wi-Fi access point required by the terminal to the first controlled device and the second controlled device, to instruct the first controlled device and the second controlled device to send to the terminal the first signal strength and the second signal strength that correspond to a Wi-Fi access point determined according to the service set identifier.

Exemplarily, the signal strength request instruction sent by the terminal to the first controlled device and the second controlled device includes an identifier of an access point device 1, an identifier of an access point device 2, and an identifier of an access point device 3, and then, after receiving the signal strength request instruction, the first controlled device sends a signal strength B1 corresponding to the access point device 1, a signal strength B2 corresponding to the access point device 2, and a signal strength B3 corresponding to the access point device 3; similarly, after receiving the signal strength request instruction, the second controlled device sends a signal strength C1 corresponding to the access point device 1, a signal strength C2 corresponding to the access point device 2, and a signal strength C3 corresponding to the access point device 3 to the terminal.

Manner 2: the terminal sends a signal strength request instruction to the first controlled device and the second controlled device, to instruct the first controlled device and the second controlled device to respectively send detected second signal strengths and third signal strengths that correspond to all access point devices to the terminal, where the all access point devices include the first access point device.

It should be noted that, different from Manner 1, in this manner, the signal strength request instruction sent by the terminal does not include an identifier of an access point device.

In addition, the second signal strength and the third signal strength include signal strengths that are obtained by the first controlled device and the second controlled device according to radio signals sent by at least three identical access point devices.

Exemplarily, in a scenario of Manner 2, there are five access point devices, namely, access point devices 1 to 5. The first controlled device detects the access point devices 1 to 4, marks a signal strength corresponding to a radio signal sent by the access point device 1 and acquired by the first controlled device as B1, marks a signal strength corresponding to a radio signal sent by the access point device 2 and acquired by the first controlled device as B2, and so on; then, the signal strengths, acquired by the first controlled device, of the access point devices 1 to 4 are B1, B2, B3, and B4 respectively. After receiving the signal strength request instruction sent by the terminal, the first controlled device sends the four second signal strengths B1, B2, B3, and B4 to the terminal. Similarly, the second controlled device detects the access point devices 2 to 5, marks a signal strength corresponding to a radio signal sent by the access point device 2 and acquired by the second controlled device as C2, marks a signal strength corresponding to a radio signal sent by the access point device 3 and acquired by the second controlled device as C3, and so on; then, the signal strengths, acquired by the second controlled device, corresponding to the access point devices 2 to 5 are C2, C3, C4, and C5 respectively. After receiving the signal strength request instruction sent by the terminal, the second controlled device sends the four third signal strengths C2, C3, C4, and C5 to the terminal. The second signal strength and the third signal strength both include the signal strengths obtained according to the radio signals sent by the access point devices 2 to 4. It is only exemplary description herein, and no limitation is imposed thereto.

S104: When determining, according to the first signal strength, the second signal strength, and the third signal strength, that a distance between the first controlled device and the terminal is less than a distance between the second controlled device and the terminal, the terminal controls the first controlled device and the second controlled device.

The first access point device includes at least three access point devices, the first signal strength corresponds to the at least three access point devices and includes at least three first signal strengths, the second signal strength corresponds to the at least three access point devices and includes at least three second signal strengths, and the third signal strength corresponds to the at least three access point devices and includes at least three third signal strengths.

Specifically, the terminal determines a first difference value according to the first signal strength and the second signal strength, and determines a second difference value according to the first signal strength and the third signal strength, where the first difference value is a difference value between the first signal strength and the second signal strength that correspond to a second access point device, and the second difference value is a difference value between the first signal strength and the third signal strength that correspond to the second access point device, where the first access point device includes the second access point device; and when determining, according to the first difference value and the second difference value, that the distance between the first controlled device and the terminal is less than the distance between the second controlled device and the terminal, controls the first controlled device and the second controlled device.

It should be noted that, the terminal determines the first difference value according to the first signal strength and the second signal strength that correspond to a same access point device; therefore, the first controlled device and the second controlled device are required to send second signal strengths and third signal strengths that correspond to at least three identical access point devices to the terminal.

Further, when determining that the first difference value corresponding to the second access point device is less than the second difference value, the terminal determines that the distance between the first controlled device and the terminal is less than the distance between the second controlled device and the terminal.

It should be noted that, the terminal determines the first difference value and the second difference value according to signal strengths determined according to radio signals sent by the same access point device, in this way, the first difference value can be compared with the second difference value.

Specifically, when determining that at least three first difference values are respectively less than second difference values corresponding to corresponding access point devices, the terminal determines that the distance between the first controlled device and the terminal is less than the distance between the second controlled device and the terminal.

Exemplarily, in an application scenario of this embodiment of the present invention, there are five access point devices, namely, access point devices 1 to 5. The terminal obtains a signal strength A1 according to a radio signal sent by the access point device 1, the first controlled device obtains a signal strength B1 according to the radio signal sent by the access point device 1, and the second controlled device obtains a signal strength C1 according to the radio signal sent by the access point device 1. The terminal obtains a signal strength A2 according to a radio signal sent by the access point device 2, the first controlled device obtains a signal strength B2 according to the radio signal sent by the access point device 2, and the second controlled device obtains a signal strength C2 according to the radio signal sent by the access point device 2. The terminal obtains a signal strength A3 according to a radio signal sent by the access point device 3, the first controlled device obtains a signal strength B3 according to the radio signal sent by the access point device 3, and the second controlled device obtains a signal strength C3 according to the radio signal sent by the access point device 3. If it is determined that a difference value between A1 and B1 is less than a difference value between A1 and C1, a difference value between A2 and B2 is less than a difference value between A2 and C2, and a difference value between A3 and B3 is less than a difference value between A3 and C3, it is determined that the first controlled device is closer to the terminal than the second controlled device is. In addition, judgment may also be performed according to a preset threshold. If it is determined that the difference value between A1 and B1, the difference value between A2 and B2, and the difference value between A3 and B3 are all less than the preset threshold, and any one of the difference value between A1 and C1, the difference value between A2 and C2, and the difference value between A3 and C3 is greater than the preset threshold, it is determined that the first controlled device is closer to the terminal than the second controlled device is. It is only exemplary description herein, and no limitation is imposed thereto.

Further, when determining that the distance between the first controlled device and the terminal is less than the distance between the second controlled device and the terminal, the terminal sends a first control instruction to the first controlled device, to instruct the first controlled device to provide a service for the terminal according to the first control instruction, and sends a second control instruction to the second controlled device, to instruct the second controlled device to stop providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

It should be noted that, this embodiment of the present invention does not limit that step S101 to step S104 are executed in a scenario in which the terminal moves. In a scenario in which the terminal is powered up and sends a playback instruction to the first controlled device and the second controlled device, a controlled device approaching the terminal may also be determined with reference to this embodiment of the present invention, and the controlled device provides a service.

By using the foregoing method executed by a terminal, the terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

An embodiment of the present invention provides a device control method. As shown in FIG. 2, the method includes:
S201: A terminal receives a first radio signal sent by a first controlled device, and determines a first signal strength according to the first radio signal.
S202: The terminal receives a second radio signal sent by a second controlled device, and determines a second signal strength according to the second radio signal.
   Specifically, the terminal and the controlled device may be connected in a point-to-point connection manner, for example, the Bluetooth or the point-to-point wireless fidelity protocol (Wi-Fi Direct). The terminal establishes connections to the first controlled device and the second controlled device. After the connection is established, the terminal acquires the first radio signal sent by the first controlled device, and obtains the first signal strength according to the first radio signal; acquires the second radio signal sent by the second controlled device, and obtains the second signal strength according to the second radio signal.
S203: When determining, according to the first signal strength and the second signal strength, that a distance between the first controlled device and the terminal is less than a distance between the second controlled device and the terminal, the terminal controls the first controlled device and the second controlled device.

Further, when determining that the first signal strength is greater than the second signal strength, the terminal determines that the first controlled device is closer to the terminal than the second controlled device is.

Specifically, in this manner, the terminal directly establishes connections to the first controlled device and the second controlled device. After receiving the first signal strength and the second signal strength, because a shorter distance to the terminal indicates that a signal strength of the radio signal received by the terminal is larger, when determining that the first signal strength is greater than the second signal strength, the terminal determines that the first controlled device is closer to the terminal than the second controlled device is.

Further, when it is determined that the first controlled device is closer to the terminal than the second controlled device is, a first control instruction is sent to the first controlled device, to instruct the first controlled device to execute the first control instruction, so that the first controlled device provides a service for the terminal according to the first control instruction; a second control instruction is sent to the second controlled device, to instruct the second controlled device to execute the second control instruction, so that the second controlled device stops providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal. The first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

It should be noted that, this embodiment of the present invention does not limit that step S201 to step S203 are executed in a scenario in which the terminal moves. In a scenario in which the terminal is powered up and sends a playback instruction to the first controlled device and the second controlled device, a controlled device approaching the terminal may also be determined with reference to this embodiment of the present invention, and the controlled device provides a service.

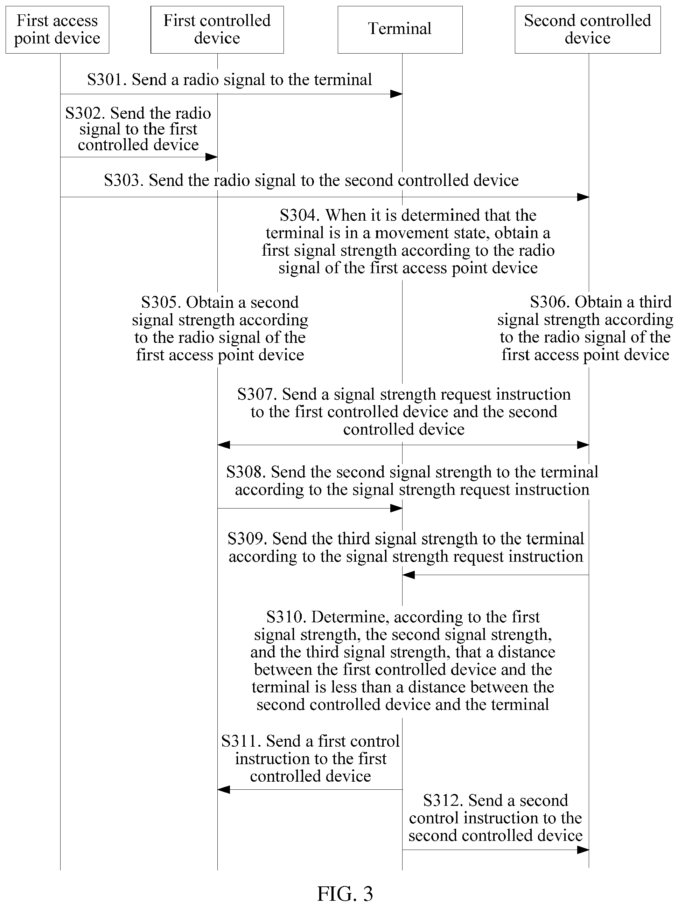

An embodiment of the present invention provides a terminal. As shown in FIG. 3, the method embodiment is described in a scenario in which a terminal is connected to a controlled device by using an access point device, and the method includes:
S301: A first access point device sends a radio signal to a terminal.
S302: The first access point device sends the radio signal to a first controlled device.
S303: The first access point device sends the radio signal to a second controlled device.
   Specifically, the first access point device includes a working access point device used for implementing network communication between the terminal and the controlled device and at least two auxiliary access point devices used for providing a radio signal to determine a distance between the terminal and the controlled device. The working access point device may also be used as an auxiliary access point device, and when determining a signal strength, the working access point device is used as an auxiliary access point device. This embodiment of the present invention is described by collectively referring to the working access point device and the auxiliary access point device as access point devices.
S304: When determining that terminal is in a movement state, the terminal obtains a first signal strength according to the radio signal of the first access point device.
   Specifically, the terminal determines by using a sensor (for example, a gravity sensor, a gyroscope, or an acceleration sensor) that the terminal is in a movement state.
S305: The first controlled device obtains a second signal strength according to the radio signal of the first access point device.
S306: The second controlled device obtains a third signal strength according to the radio signal of the first access point device.
   Specifically, the first access point device includes at least three access point devices, and the terminal receives at least three radio signals sent by the at least three access point devices, and obtains at least three first signal strengths according to the at least three radio signals. Similarly, the first controlled device receives at least three radio signals sent by the at least three access point devices, and obtains at least three second signal strengths according to the at least three radio signals. Similarly, the second controlled device receives the at least three radio signals sent by the at least three access point devices, and obtains at least three third signal strengths according to the at least three radio signals.
S307: The terminal sends a signal strength request instruction to the first controlled device and the second controlled device.
   Specifically, the terminal sends a signal strength request instruction to the first controlled device and the second controlled device, to instruct the first controlled device and the second controlled device to respectively send the first signal strength and the second signal strength to the terminal according to the signal strength request instruction.
   The second signal strength includes at least three signal strengths obtained when the first controlled device receives the radio signals of the at least three first access point devices, and the third signal strength includes at least three signal strengths obtained when the second controlled device receives the radio signals of the at least three first access point devices.
S308: The first controlled device sends the second signal strength to the terminal according to the signal strength request instruction.
S309: The second controlled device sends the third signal strength to the terminal according to the signal strength request instruction.

Specifically, the terminal may send the signal strength request instruction in a broadcast manner; after receiving the signal strength request instruction, the first controlled device sends at least three second signal strengths corresponding to the at least three first access point devices and identifier information of the first controlled device to the terminal; and after receiving the signal strength request instruction, the second controlled device sends at least three third signal strengths corresponding to the at least three first access point devices and identifier information of the second controlled device to the terminal. In this way, the terminal can determine, according to the identifier information, a sending party corresponding to the received signal strength. Certainly, the terminal may also directly send the signal strength request instruction to the first controlled device and the second controlled device; after receiving the signal strength request instruction, the first controlled device sends at least three second signal strengths corresponding to the at least three first access point devices to the terminal; and after receiving the signal strength request instruction, the second controlled device sends at least three third signal strengths corresponding to the at least three first access point devices to the terminal, which is not limited in the present invention.

It should be noted that, because the first controlled device and the second controlled device send signal strengths corresponding to multiple access point devices to the terminal, when sending the signal strengths to the terminal, the first controlled device and the second controlled device also need to send an identifier of an access point device corresponding to each signal strength to the terminal, so as to notify the terminal of an access point device corresponding to the received signal strength.

Optionally, the terminal sends the signal strength request instruction to the first controlled device and the second controlled device, and acquires the second signal strength, corresponding to the first access point device, of the first controlled device and the third signal strength, corresponding to the first access point device, of the second controlled device in the following two manners:
Manner 1: the terminal sends a signal strength request instruction including an identifier of the first access point device to the first controlled device and the second controlled device, to instruct the first controlled device and the second controlled device to respectively send the second signal strength and the third signal strength that correspond to the first access point device to the terminal according to the identifier.

Specifically, the access point device may be a Wi-Fi (WirelessFidel, wireless fidelity protocol) access point (English: Access Point, AP for short), and an identifier of the access point device may be a service set identifier (English: Service Set Identifier, SSID for short) of the Wi-Fi access point. The terminal may send a signal strength request instruction including the service set identifier to the first controlled device and the second controlled device, to instruct the first controlled device and the second controlled device to determine to send to the terminal the signal strength that is determined according to a radio signal sent by a Wi-Fi access point corresponding to the service set identifier. In this way, the terminal can send a signal request instruction including the service set identifier of a Wi-Fi access point required by the terminal to the first controlled device and the second controlled device, to instruct the first controlled device and the second controlled device to send to the terminal the first signal strength and the second signal strength that correspond to a Wi-Fi access point determined according to the service set identifier.

Exemplarily, the signal strength request instruction sent by the terminal to the first controlled device and the second controlled device includes an identifier of an access point device 1, an identifier of an access point device 2, and an identifier of an access point device 3, and then, after receiving the signal strength request instruction, the first controlled device sends a signal strength B1 corresponding to the access point device 1, a signal strength B2 corresponding to the access point device 2, and a signal strength B3 corresponding to the access point device 3; similarly, after receiving the signal strength request instruction, the second controlled device sends a signal strength C1 corresponding to the access point device 1, a signal strength C2 corresponding to the access point device 2, and a signal strength C3 corresponding to the access point device 3 to the terminal.

Manner 2: the terminal sends a signal strength request instruction to the first controlled device and the second controlled device, to instruct the first controlled device and the second controlled device to respectively send detected second signal strengths and third signal strengths that correspond to all access point devices to the terminal, where the all access point devices include the first access point device.

It should be noted that, different from Manner 1, in this manner, the signal strength request instruction sent by the terminal does not include an identifier of an access point device.

In addition, the second signal strength and the third signal strength include signal strengths that are obtained by the first controlled device and the second controlled device according to radio signals sent by at least three identical access point devices.

Exemplarily, in a scenario of Manner 2, there are five access point devices, namely, access point devices 1 to 5. The first controlled device detects the access point devices 1 to 4, marks a signal strength corresponding to a radio signal sent by the access point device 1 and acquired by the first controlled device as B1, marks a signal strength corresponding to a radio signal sent by the access point device 2 and acquired by the first controlled device as B2, and so on; then, the signal strengths, acquired by the first controlled device, of the access point devices 1 to 4 are B1, B2, B3, and B4 respectively. After receiving the signal strength request instruction sent by the terminal, the first controlled device sends the four second signal strengths B1, B2, B3, and B4 to the terminal. Similarly, the second controlled device detects the access point devices 2 to 5, marks a signal strength corresponding to a radio signal sent by the access point device 2 and acquired by the second controlled device as C2, marks a signal strength corresponding to a radio signal sent by the access point device 3 and acquired by the second controlled device as C3, and so on; then, the signal strengths, acquired by the second controlled device, corresponding to the access point devices 2 to 5 are C2, C3, C4, and C5 respectively. After receiving the signal strength request instruction sent by the terminal, the second controlled device sends the four third signal strengths C2, C3, C4, and C5 to the terminal. The second signal strength and the third signal strength both include the signal strengths obtained according to the radio signals sent by the access point devices 2 to 4. It is only exemplary description herein, and no limitation is imposed thereto.

S310: The terminal determines, according to the first signal strength, the second signal strength, and the third signal strength, that a distance between the first controlled device and the terminal is less than a distance between the second controlled device and the terminal.

The first access point device includes at least three access point devices, the first signal strength corresponds to the at least three access point devices and includes at least three first signal strengths, the second signal strength corresponds to the at least three access point devices and includes at least three second signal strengths, and the third signal strength corresponds to the at least three access point devices and includes at least three third signal strengths.

Specifically, the terminal determines a first difference value according to the first signal strength and the second signal strength, and determines a second difference value according to the first signal strength and the third signal strength, where the first difference value is a difference value between the first signal strength and the second signal strength that correspond to a second access point device, and the second difference value is a difference value between the first signal strength and the third signal strength that correspond to the second access point device, where the first access point device includes the second access point device; and determines, according to the first difference value and the second difference value, that a distance between the first controlled device and the terminal is less than a distance between the second controlled device and the terminal.

It should be noted that, the terminal determines the first difference value according to the first signal strength and the second signal strength that correspond to a same access point device; therefore, the first controlled device and the second controlled device are required to send second signal strengths and third signal strengths that correspond to at least three identical access point devices to the terminal.

Further, when determining that the first difference value corresponding to the second access point device is less than the second difference value, the terminal determines that the distance between the first controlled device and the terminal is less than the distance between the second controlled device and the terminal.

It should be noted that, the terminal determines the first difference value and the second difference value according to signal strengths determined according to radio signals sent by the same access point device, in this way, the first difference value can be compared with the second difference value.

Specifically, when determining that at least three first difference values are respectively less than second difference values corresponding to corresponding access point devices, the terminal determines that the distance between the first controlled device and the terminal is less than the distance between the second controlled device and the terminal.

Exemplarily, in an application scenario of this embodiment of the present invention, there are five access point devices, namely, access point devices 1 to 5. The terminal obtains a signal strength A1 according to a radio signal sent by the access point device 1, the first controlled device obtains a signal strength B1 according to the radio signal sent by the access point device 1, and the second controlled device obtains a signal strength C1 according to the radio signal sent by the access point device 1. The terminal obtains a signal strength A2 according to a radio signal sent by the access point device 2, the first controlled device obtains a signal strength B2 according to the radio signal sent by the access point device 2, and the second controlled device obtains a signal strength C2 according to the radio signal sent by the access point device 2. The terminal obtains a signal strength A3 according to a radio signal sent by the access point device 3, the first controlled device obtains a signal strength B3 according to the radio signal sent by the access point device 3, and the second controlled device obtains a signal strength C3 according to the radio signal sent by the access point device 3. If it is determined that a difference value between A1 and B1 is less than a difference value between A1 and C1, a difference value between A2 and B2 is less than a difference value between A2 and C2, and a difference value between A3 and B3 is less than a difference value between A3 and C3, it is determined that the first controlled device is closer to the terminal than the second controlled device is. In addition, judgment may also be performed according to a preset threshold. If it is determined that the difference value between A1 and B1, the difference value between A2 and B2, and the difference value between A3 and B3 are all less than the preset threshold, and any one of the difference value between A1 and C1, the difference value between A2 and C2, and the difference value between A3 and C3 is greater than the preset threshold, it is determined that the first controlled device is closer to the terminal than the second controlled device is. It is only exemplary description herein, and no limitation is imposed thereto.

S311: The terminal sends a first control instruction to the first controlled device.

The first control instruction is used to instruct the first controlled device to provide a service for the terminal.

S312: The terminal sends a second control instruction to the second controlled device.

The second control instruction is used to instruct the second controlled device to stop providing a service for the terminal.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

By using the foregoing solution, a terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

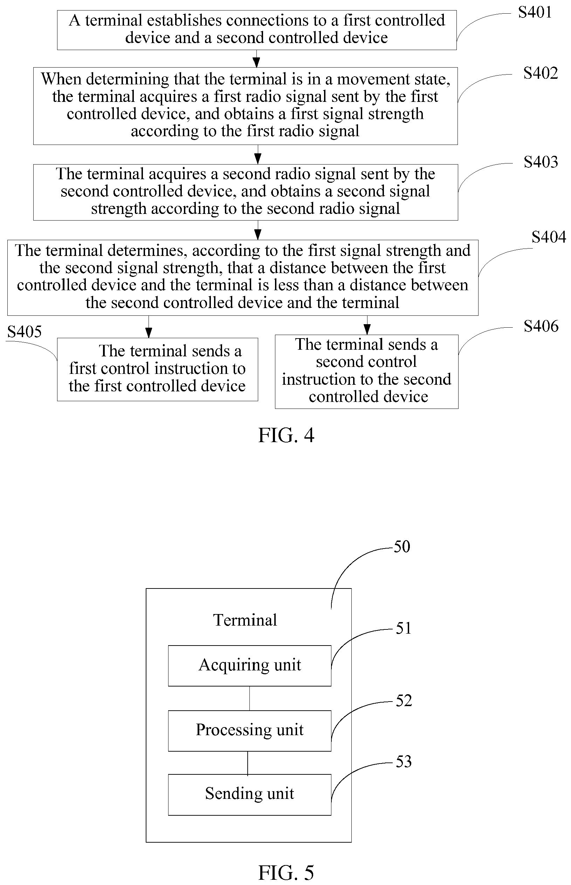

An embodiment of the present invention provides a device control method. As shown in FIG. 4, the method embodiment is described by using an example in which the terminal is connected to a controlled device in a point-to-point connection manner (for example, the Bluetooth or the point-to-point wireless fidelity protocol). The method includes:
S401: A terminal establishes connections to a first controlled device and a second controlled device.
S402: When determining that the terminal is in a movement state, the terminal acquires a first radio signal sent by the first controlled device, and obtains a first signal strength according to the first radio signal.
   Specifically, the terminal determines by using a sensor (for example, a gravity sensor, a gyroscope, or an acceleration sensor) that the terminal is in a movement state.
S403: The terminal acquires a second radio signal sent by the second controlled device, and obtains a second signal strength according to the second radio signal.
S404: The terminal determines, according to the first signal strength and the second signal strength, that a distance between the first controlled device and the terminal is less than a distance between the second controlled device and the terminal.
   Specifically, when determining that the first signal strength is greater than the second signal strength, the terminal determines that the distance between the first controlled device and the terminal is less than the distance between the second controlled device and the terminal.
   It should be noted that, in this embodiment of the present invention, the terminal directly establishes connections to the first controlled device and the second controlled device. After receiving the first signal strength and the second signal strength, because a shorter distance to the terminal indicates that a signal strength of the radio signal received by the terminal is larger, when determining that the first signal strength is greater than the second signal strength, the terminal determines that the distance between the first controlled device and the terminal is less than the distance between the second controlled device and the terminal.
S405: The terminal sends a first control instruction to the first controlled device.
   The first control instruction is used to instruct the first controlled device to provide a service according to the first control instruction.
S406: The terminal sends a second control instruction to the second controlled device.

The second control instruction is used to instruct the second controlled device to stop providing a service according to the second control instruction.

Specifically, when it is determined that the first controlled device is closer to the terminal than the second controlled device is, a first control instruction is sent to the first controlled device, to instruct the first controlled device to execute the first control instruction, so that the first controlled device provides a service for the terminal according to the first control instruction; a second control instruction is sent to the second controlled device, to instruct the second controlled device to execute the second control instruction, so that the second controlled device stops providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal. The first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

It should be noted that, this embodiment of the present invention does not limit that step S401 to step S406 are executed in a scenario in which the terminal moves. In a scenario in which the terminal is powered up and sends a playback instruction to the first controlled device and the second controlled device, a controlled device approaching the terminal may also be determined with reference to this embodiment of the present invention, and the controlled device provides a service.

In this way, when a terminal is connected to a controlled device in a point-to-point connection manner, the terminal senses a relationship between distances between the controlled device and the terminal, so as to execute a corresponding operation according to the relationship between distances, thereby improving user experience.

An embodiment of the present invention provides a terminal 50. As shown in FIG. 5, the terminal 50 includes:
an acquiring unit 51, configured to receive a radio signal sent by a first access point device, where the first access point device includes at least one first access point device; and
a processing unit 52, configured to determine a corresponding first signal strength according to the radio signal sent by the first access point device and obtained by the acquiring unit, where the first signal strength includes at least one first signal strength, where
the acquiring unit 51 is further configured to acquire a second signal strength, corresponding to the first access point device, of a first controlled device and a third signal strength, corresponding to the first access point device, of a second controlled device, where the second signal strength includes at least one second signal strength, and the third signal strength includes at least one third signal strength; and
the processing unit 52 is further configured to: when it is determined, according to the first signal strength, the second signal strength, and the third signal strength, that a distance between the first controlled device and the terminal is less than a distance between the second controlled device and the terminal, control the first controlled device and the second controlled device.

The first access point device includes a working access point device used for implementing network communication between the terminal and the controlled device and at least two auxiliary access point devices used for providing a radio signal to determine a distance between the terminal and the controlled device. The working access point device may also be used as an auxiliary access point device, and when determining a signal strength, the working access point device is used as an auxiliary access point device. This embodiment of the present invention is described by collectively referring to the working access point device and the auxiliary access point device as access point devices.

Further, the terminal sends a signal strength request instruction to the first controlled device and the second controlled device, to instruct the first controlled device and the second controlled device to respectively send the first signal strength and the second signal strength to the terminal according to the signal strength request instruction.

Specifically, the terminal may send the signal strength request instruction in a broadcast manner; after receiving the signal strength request instruction, the first controlled device sends at least three second signal strengths corresponding to at least three first access point devices and identifier information of the first controlled device to the terminal; and after receiving the signal strength request instruction, the second controlled device sends at least three third signal strengths corresponding to the at least three first access point devices and identifier information of the second controlled device to the terminal. In this way, the terminal can determine, according to the identifier information, a sending party corresponding to the received signal strength. Certainly, the terminal may also directly send the signal strength request instruction to the first controlled device and the second controlled device; after receiving the signal strength request instruction, the first controlled device sends at least three second signal strengths corresponding to the at least three first access point devices to the terminal; and after receiving the signal strength request instruction, the second controlled device sends at least three third signal strengths corresponding to the at least three first access point devices to the terminal, which is not limited in the present invention.

It should be noted that, because the first controlled device and the second controlled device send signal strengths corresponding to multiple access point devices to the terminal, when sending the signal strengths to the terminal, the first controlled device and the second controlled device also need to send an identifier of an access point device corresponding to each signal strength to the terminal, so as to notify the terminal of an access point device corresponding to the received signal strength.

Optionally, the terminal further includes a sending unit 53, configured to send a signal strength request instruction including an identifier of the first access point device to the first controlled device and the second controlled device, to instruct the first controlled device and the second controlled device to respectively send the second signal strength and the third signal strength that correspond to the first access point device to the terminal according to the identifier.

Specifically, the access point device may be a Wi-Fi (WirelessFidel, wireless fidelity protocol) access point (English: Access Point, AP for short), and an identifier of the access point device may be a service set identifier (English: Service Set Identifier, SSID for short) of the Wi-Fi access point. The terminal may send a signal strength request instruction including the service set identifier to the first controlled device and the second controlled device, to instruct the first controlled device and the second controlled device to determine to send to the terminal the signal strength that is determined according to a radio signal sent by a Wi-Fi access point corresponding to the service set identifier. In this way, the terminal can send a signal request instruction including the service set identifier of a Wi-Fi access point required by the terminal to the first controlled device and the second controlled device, to instruct the first controlled device and the second controlled device to send to the terminal the first signal strength and the second signal strength that correspond to a Wi-Fi access point determined according to the service set identifier.

Exemplarily, the signal strength request instruction sent by the terminal to the first controlled device and the second controlled device includes an identifier of an access point device 1, an identifier of an access point device 2, and an identifier of an access point device 3, and then, after receiving the signal strength request instruction, the first controlled device sends a signal strength B1 corresponding to the access point device 1, a signal strength B2 corresponding to the access point device 2, and a signal strength B3 corresponding to the access point device 3; similarly, after receiving the signal strength request instruction, the second controlled device sends a signal strength C1 corresponding to the access point device 1, a signal strength C2 corresponding to the access point device 2, and a signal strength C3 corresponding to the access point device 3 to the terminal.

Optionally, the sending unit 53 is further configured to send a signal strength request instruction to the first controlled device and the second controlled device, to instruct the first controlled device and the second controlled device to respectively send detected second signal strengths and third signal strengths that correspond to all access point devices to the terminal.

The all access point devices include the first access point device.

It should be noted that, different from Manner 1, in this manner, the signal strength request instruction sent by the terminal does not include an identifier of an access point device.

In addition, the second signal strength and the third signal strength include signal strengths that are obtained by the first controlled device and the second controlled device according to radio signals sent by at least three identical access point devices.

Exemplarily, in a scenario of Manner 2, there are five access point devices, namely, access point devices 1 to 5. The first controlled device detects the access point devices 1 to 4, marks a signal strength corresponding to a radio signal sent by the access point device 1 and acquired by the first controlled device as B1, marks a signal strength corresponding to a radio signal sent by the access point device 2 and acquired by the first controlled device as B2, and so on; then, the signal strengths, acquired by the first controlled device, of the access point devices 1 to 4 are B1, B2, B3, and B4 respectively. After receiving the signal strength request instruction sent by the terminal, the first controlled device sends the four second signal strengths B1, B2, B3, and B4 to the terminal. Similarly, the second controlled device detects the access point devices 2 to 5, marks a signal strength corresponding to a radio signal sent by the access point device 2 and acquired by the second controlled device as C2, marks a signal strength corresponding to a radio signal sent by the access point device 3 and acquired by the second controlled device as C3, and so on; then, the signal strengths, acquired by the second controlled device, corresponding to the access point devices 2 to 5 are C2, C3, C4, and C5 respectively. After receiving the signal strength request instruction sent by the terminal, the second controlled device sends the four third signal strengths C2, C3, C4, and C5 to the terminal. The second signal strength and the third signal strength both include the signal strengths obtained according to the radio signals sent by the access point devices 2 to 4. It is only exemplary description herein, and no limitation is imposed thereto.

Further, the processing unit 52 is specifically configured to: determine a first difference value according to the first signal strength and the second signal strength, and determine a second difference value according to the first signal strength and the third signal strength, where the first difference value is a difference value between the first signal strength and the second signal strength that correspond to a second access point device, and the second difference value is a difference value between the first signal strength and the third signal strength that correspond to the second access point device.

The first access point device includes at least three access point devices, the first signal strength corresponds to the at least three access point devices and includes at least three first signal strengths, the second signal strength corresponds to the at least three access point devices and includes at least three second signal strengths, and the third signal strength corresponds to the at least three access point devices and includes at least three third signal strengths, and the first access point device includes the second access point device.

Optionally, the processing unit 52 is further configured to: when it is determined, according to the first difference value and the second difference value, that the distance between the first controlled device and the terminal is less than the distance between the second controlled device and the terminal, control the first controlled device and the second controlled device.

Specifically, the terminal determines the first difference value according to the first signal strength and the second signal strength, and determines the second difference value according to the first signal strength and the third signal strength, where the first difference value is a difference value between the first signal strength and the second signal strength that correspond to the second access point device, and the second difference value is a difference value between the first signal strength and the third signal strength that correspond to the second access point device, where the first access point device includes the second access point device; and when determining, according to the first difference value and the second difference value, that the distance between the first controlled device and the terminal is less than the distance between the second controlled device and the terminal, controls the first controlled device and the second controlled device.

It should be noted that, the terminal determines the first difference value according to the first signal strength and the second signal strength that correspond to a same access point device; therefore, the first controlled device and the second controlled device are required to send second signal strengths and third signal strengths that correspond to at least three identical access point devices to the terminal.

Further, the processing unit 52 is specifically configured to: when it is determined that the first difference value corresponding to the second access point device is less than the second difference value, determine that the distance between the first controlled device and the terminal is less than the distance between the second controlled device and the terminal.

It should be noted that, the terminal determines the first difference value and the second difference value according to signal strengths determined according to radio signals sent by the same access point device, in this way, the first difference value can be compared with the second difference value.

Specifically, when determining that at least three first difference values are respectively less than second difference values corresponding to corresponding access point devices, the terminal determines that the distance between the first controlled device and the terminal is less than the distance between the second controlled device and the terminal.

Exemplarily, in an application scenario of this embodiment of the present invention, there are five access point devices, namely, access point devices 1 to 5. The terminal obtains a signal strength A1 according to a radio signal sent by the access point device 1, the first controlled device obtains a signal strength B1 according to the radio signal sent by the access point device 1, and the second controlled device obtains a signal strength C1 according to the radio signal sent by the access point device 1. The terminal obtains a signal strength A2 according to a radio signal sent by the access point device 2, the first controlled device obtains a signal strength B2 according to the radio signal sent by the access point device 2, and the second controlled device obtains a signal strength C2 according to the radio signal sent by the access point device 2. The terminal obtains a signal strength A3 according to a radio signal sent by the access point device 3, the first controlled device obtains a signal strength B3 according to the radio signal sent by the access point device 3, and the second controlled device obtains a signal strength C3 according to the radio signal sent by the access point device 3. If it is determined that a difference value between A1 and B1 is less than a difference value between A1 and C1, a difference value between A2 and B2 is less than a difference value between A2 and C2, and a difference value between A3 and B3 is less than a difference value between A3 and C3, it is determined that the first controlled device is closer to the terminal than the second controlled device is. In addition, judgment may also be performed according to a preset threshold. If it is determined that the difference value between A1 and B1, the difference value between A2 and B2, and the difference value between A3 and B3 are all less than the preset threshold, and any one of the difference value between A1 and C1, the difference value between A2 and C2, and the difference value between A3 and C3 is greater than the preset threshold, it is determined that the first controlled device is closer to the terminal than the second controlled device is. It is only exemplary description herein, and no limitation is imposed thereto.

The sending unit 53 is further configured to send: a first control instruction to the first controlled device to instruct the first controlled device to provide a service for the terminal according to the first control instruction, and send a second instruction to the second controlled device to instruct the second controlled device to stop providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

By using the foregoing terminal, the terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

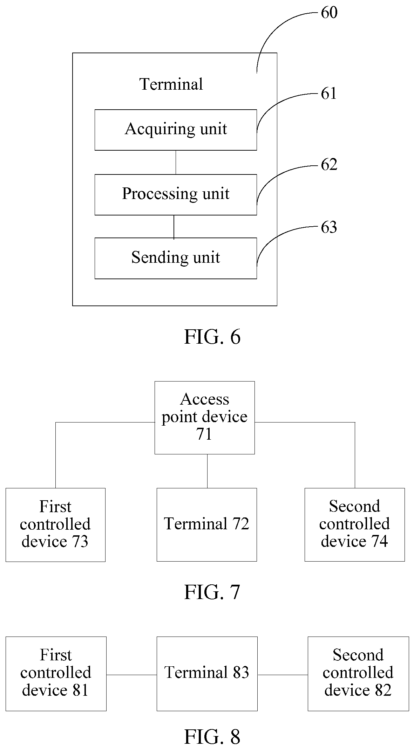

An embodiment of the present invention provides a terminal 60. As shown in FIG. 6, the terminal includes:
an acquiring unit 61, configured to receive a first radio signal sent by a first controlled device, and receive a second radio signal sent by a second controlled device; and
a processing unit 62, configured to: determine a first signal strength according to the first radio signal obtained by the acquiring unit, determine a second signal strength according to the second radio signal obtained by the acquiring unit, and when it is determined, according to the first signal strength and the second signal strength, that a distance between the first controlled device and the terminal is less than a distance between the second controlled device and the terminal, control the first controlled device and the second controlled device.

Specifically, before acquiring a first signal strength corresponding to the first controlled device and a second signal strength corresponding to the second controlled device, the terminal establishes connections to the first controlled device and the second controlled device.

Optionally, the processing unit 62 is further configured to: when it is determined that the first signal strength is greater than the second signal strength, determine that the distance between the first controlled device and the terminal is less than the distance between the second controlled device and the terminal.

The terminal further includes a sending unit 63, configured to send: a first control instruction to the first controlled device to instruct the first controlled device to provide a service for the terminal according to the first control instruction, and send a second instruction to the second controlled device to instruct the second controlled device to stop providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

An embodiment of the present invention provides a device control system. As shown in FIG. 7, the system includes: a first access point device 71, a terminal 72, a first controlled device 73, and a second controlled device 74, where the first access point device 71 includes at least three access point devices, where
the first access point device 71 is configured to send a radio signal to the terminal, the first controlled device, and the second controlled device;
the terminal 72 is configured to: receive the radio signal sent by the first access point device, determine a corresponding first signal strength according to the radio signal sent by the first access point device, acquire a second signal strength, corresponding to the first access point device, of the first controlled device and a third signal strength, corresponding to the first access point device, of the second controlled device, and when determining, according to the first signal strength, the second signal strength, and the third signal strength, that a distance between the first controlled device and the terminal is less than a distance between the second controlled device and the terminal, control the first controlled device and the second controlled device, where the first signal strength includes at least one first signal strength, the second signal strength includes at least one second signal strength, and the third signal strength includes at least one third signal strength;
the first controlled device 73 is configured to: receive the radio signal sent by the first access point device, determine a corresponding second signal strength according to the radio signal sent by the first access point device, and send the second signal strength to the terminal; and
the second controlled device 74 is configured to: receive the radio signal sent by the first access point device, determine a corresponding third signal strength according to the radio signal sent by the first access point device, and send the third signal strength to the terminal.

Optionally, the terminal sends the signal strength request instruction to the first controlled device and the second controlled device, and acquires the second signal strength, corresponding to the first access point device, of the first controlled device and the third signal strength, corresponding to the first access point device, of the second controlled device in the following two manners:
Manner 1: the terminal sends a signal strength request instruction including an identifier of the first access point device to the first controlled device and the second controlled device, to instruct the first controlled device and the second controlled device to respectively send the second signal strength and the third signal strength that correspond to the first access point device to the terminal according to the identifier.

Specifically, the access point device may be a Wi-Fi (WirelessFidel, wireless fidelity protocol) access point (English: Access Point, AP for short), and an identifier of the access point device may be a service set identifier (English: Service Set Identifier, SSID for short) of the Wi-Fi access point. The terminal may send a signal strength request instruction including the service set identifier to the first controlled device and the second controlled device, to instruct the first controlled device and the second controlled device to determine to send to the terminal the signal strength that is determined according to a radio signal sent by a Wi-Fi access point corresponding to the service set identifier. In this way, the terminal can send a signal request instruction including the service set identifier of a Wi-Fi access point required by the terminal to the first controlled device and the second controlled device, to instruct the first controlled device and the second controlled device to send to the terminal the first signal strength and the second signal strength that correspond to a Wi-Fi access point determined according to the service set identifier.

Exemplarily, the signal strength request instruction sent by the terminal to the first controlled device and the second controlled device includes an identifier of an access point device 1, an identifier of an access point device 2, and an identifier of an access point device 3, and then, after receiving the signal strength request instruction, the first controlled device sends a signal strength B1 corresponding to the access point device 1, a signal strength B2 corresponding to the access point device 2, and a signal strength B3 corresponding to the access point device 3; similarly, after receiving the signal strength request instruction, the second controlled device sends a signal strength C1 corresponding to the access point device 1, a signal strength C2 corresponding to the access point device 2, and a signal strength C3 corresponding to the access point device 3 to the terminal.

Manner 2: the terminal sends a signal strength request instruction to the first controlled device and the second controlled device, to instruct the first controlled device and the second controlled device to respectively send detected second signal strengths and third signal strengths that correspond to all access point devices to the terminal, where the all access point devices include the first access point device.

It should be noted that, different from Manner 1, in this manner, the signal strength request instruction sent by the terminal does not include an identifier of an access point device.

In addition, the second signal strength and the third signal strength include signal strengths that are obtained by the first controlled device and the second controlled device according to radio signals sent by at least three identical access point devices.

Exemplarily, in a scenario of Manner 2, there are five access point devices, namely, access point devices 1 to 5. The first controlled device detects the access point devices 1 to 4, marks a signal strength corresponding to a radio signal sent by the access point device 1 and acquired by the first controlled device as B1, marks a signal strength corresponding to a radio signal sent by the access point device 2 and acquired by the first controlled device as B2, and so on; then, the signal strengths, acquired by the first controlled device, of the access point devices 1 to 4 are B1, B2, B3, and B4 respectively. After receiving the signal strength request instruction sent by the terminal, the first controlled device sends the four second signal strengths B1, B2, B3, and B4 to the terminal. Similarly, the second controlled device detects the access point devices 2 to 5, marks a signal strength corresponding to a radio signal sent by the access point device 2 and acquired by the second controlled device as C2, marks a signal strength corresponding to a radio signal sent by the access point device 3 and acquired by the second controlled device as C3, and so on; then, the signal strengths, acquired by the second controlled device, corresponding to the access point devices 2 to 5 are C2, C3, C4, and C5 respectively. After receiving the signal strength request instruction sent by the terminal, the second controlled device sends the four third signal strengths C2, C3, C4, and C5 to the terminal. The second signal strength and the third signal strength both include the signal strengths obtained according to the radio signals sent by the access point devices 2 to 4. It is only exemplary description herein, and no limitation is imposed thereto.

Further, the terminal determines a first difference value according to the first signal strength and the second signal strength, and determines a second difference value according to the first signal strength and the third signal strength, where the first difference value is a difference value between the first signal strength and the second signal strength that correspond to a second access point device, and the second difference value is a difference value between the first signal strength and the third signal strength that correspond to the second access point device, where the first access point device includes the second access point device; and when determining, according to the first difference value and the second difference value, that the distance between the first controlled device and the terminal is less than the distance between the second controlled device and the terminal, controls the first controlled device and the second controlled device.

It should be noted that, the terminal determines the first difference value according to the first signal strength and the second signal strength that correspond to a same access point device; therefore, the first controlled device and the second controlled device are required to send second signal strengths and third signal strengths that correspond to at least three identical access point devices to the terminal.

Further, when determining that the first difference value corresponding to the second access point device is less than the second difference value, the terminal determines that the distance between the first controlled device and the terminal is less than the distance between the second controlled device and the terminal.

It should be noted that, the terminal determines the first difference value and the second difference value according to signal strengths determined according to radio signals sent by the same access point device, in this way, the first difference value can be compared with the second difference value.

Specifically, when determining that at least three first difference values are respectively less than second difference values corresponding to corresponding access point devices, the terminal determines that the distance between the first controlled device and the terminal is less than the distance between the second controlled device and the terminal.

Exemplarily, in an application scenario of this embodiment of the present invention, there are five access point devices, namely, access point devices 1 to 5. The terminal obtains a signal strength A1 according to a radio signal sent by the access point device 1, the first controlled device obtains a signal strength B1 according to the radio signal sent by the access point device 1, and the second controlled device obtains a signal strength C1 according to the radio signal sent by the access point device 1. The terminal obtains a signal strength A2 according to a radio signal sent by the access point device 2, the first controlled device obtains a signal strength B2 according to the radio signal sent by the access point device 2, and the second controlled device obtains a signal strength C2 according to the radio signal sent by the access point device 2. The terminal obtains a signal strength A3 according to a radio signal sent by the access point device 3, the first controlled device obtains a signal strength B3 according to the radio signal sent by the access point device 3, and the second controlled device obtains a signal strength C3 according to the radio signal sent by the access point device 3. If it is determined that a difference value between A1 and B1 is less than a difference value between A1 and C1, a difference value between A2 and B2 is less than a difference value between A2 and C2, and a difference value between A3 and B3 is less than a difference value between A3 and C3, it is determined that the first controlled device is closer to the terminal than the second controlled device is. In addition, judgment may also be performed according to a preset threshold. If it is determined that the difference value between A1 and B1, the difference value between A2 and B2, and the difference value between A3 and B3 are all less than the preset threshold, and any one of the difference value between A1 and C1, the difference value between A2 and C2, and the difference value between A3 and C3 is greater than the preset threshold, it is determined that the first controlled device is closer to the terminal than the second controlled device is. It is only exemplary description herein, and no limitation is imposed thereto.

Further, when determining that the distance between the first controlled device and the terminal is less than the distance between the second controlled device and the terminal, the terminal sends a first control instruction to the first controlled device, to instruct the first controlled device to provide a service for the terminal according to the first control instruction, and sends a second control instruction to the second controlled device, to instruct the second controlled device to stop providing a service for the terminal according to the second control instruction.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

By using the foregoing device control system, a terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

An embodiment of the present invention provides a device control system. As shown in FIG. 8, the system includes a first controlled device 81, a second controlled device 82, and a terminal 83, where
the first controlled device 81 is configured to send a first radio signal to the terminal;
the second controlled device 82 is configured to send a second radio signal to the terminal; and
the terminal 83 is configured to: determine a first signal strength according to the first radio signal, determine a second signal strength according to the second radio signal, and when determining, according to the first signal strength and the second signal strength, that a distance between the first controlled device and the terminal is less than a distance between the second controlled device and the terminal, control the first controlled device and the second controlled device.

Exemplarily, description is made by using an example in which the first controlled device is a first intelligent acoustic device, and the second controlled device is a second intelligent acoustic device. The terminal determines by using a sensor (for example, a gravity sensor, a gyroscope, or an acceleration sensor) that the terminal is in a movement state, and determines that the terminal approaches the first intelligent acoustic device and gets away from the second intelligent acoustic device; and before the terminal approaches the first acoustic device, the second intelligent acoustic device is playing an audio stream sent by the terminal; then, the terminal sends a first control instruction to the first intelligent acoustic device, and sends a second control instruction to the second intelligent acoustic device, where the first control instruction may be one or more of the following operations: waking up the first intelligent acoustic device, transferring an audio stream to the first intelligent acoustic device, and turning up volume of the first intelligent acoustic device; and the second control instruction may be one or more of the following operations: turning down volume of the second intelligent acoustic device, stopping transferring an audio stream to the second intelligent acoustic device, and enabling the second intelligent acoustic device to enter a sleeping state.

By using the foregoing device control system, a terminal receives a radio signal sent by a first access point device, determines a corresponding first signal strength according to the radio signal sent by the first access point device, acquires a second signal strength, corresponding to the first access point device, of a first controlled device and a third signal strength, corresponding to the first access point device, of a second controlled device, and when determining, according to the first signal strength, the second signal strength, and the third signal strength, that a distance between the first controlled device and the terminal is less than a distance between the second controlled device and the terminal, controls the first controlled device and the second controlled device. In this way, the terminal senses a relationship between distances between the controlled device and the terminal, so as to execute a corresponding operation according to the relationship between distances, thereby improving user experience.

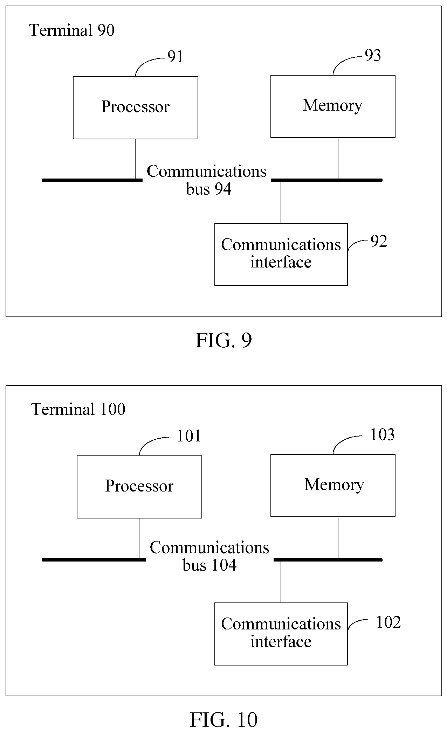

The present invention provides a terminal 90. As shown in FIG. 9, the terminal 90 includes:
a processor (processor) 91, a communications interface (Communications Interface) 92, a memory (memory) 93, and a communications bus 94, where the processor 91, the communications interface 92, and the memory 93 communicate with each other by using the communications bus 94.

The processor 91 may be a central processing unit CPU, or an application-specific integrated circuit ASIC (Application Specific Integrated Circuit), or one or more integrated circuits configured to implement the embodiments of the present application.

The memory 93 is configured to store program code, where the program code includes a computer operation instruction. The memory 93 may include a high speed RAM memory, or may include a non-volatile memory (non-volatile memory), for example, at least one magnetic memory.

The communications interface 92 is configured to implement connection communication between the apparatuses.

The processor 91 executes the program code, and is configured to: receive a radio signal sent by a first access point device, determine a corresponding first signal strength according to the radio signal sent by the first access point device, acquire a second signal strength, corresponding to the first access point device, of a first controlled device and a third signal strength, corresponding to the first access point device, of a second controlled device, and when it is determined, according to the first signal strength, the second signal strength, and the third signal strength, that a distance between the first controlled device and the terminal is less than a distance between the second controlled device and the terminal, control the first controlled device and the second controlled device, where the first signal strength includes at least one first signal strength, the second signal strength includes at least one second signal strength, and the third signal strength includes at least one third signal strength.

Optionally, the processor 91 is further configured to send a signal strength request instruction including an identifier of the first access point device to the first controlled device and the second controlled device, to instruct the first controlled device and the second controlled device to respectively send the second signal strength and the third signal strength that correspond to the first access point device to the terminal according to the identifier.

Optionally, the processor 91 is further configured to send a signal strength request instruction to the first controlled device and the second controlled device, to instruct the first controlled device and the second controlled device to respectively send detected second signal strengths and third signal strengths that correspond to all access point devices to the terminal, where the all access point devices include the first access point device.

Optionally, the processor 91 is further configured to: determine a first difference value according to the first signal strength and the second signal strength, and determine a second difference value according to the first signal strength and the third signal strength, where the second difference value is a difference value between the first signal strength and the third signal strength that correspond to a second access point device, and when it is determined, according to the first difference value and the second difference value, that the distance between the first controlled device and the terminal is less than the distance between the second controlled device and the terminal, control the first controlled device and the second controlled device, where the first difference value is a difference value between the first signal strength and the second signal strength that correspond to the second access point device, where the first access point device includes the second access point device.

Optionally, the processor 91 is further configured to: when it is determined that the first difference value corresponding to the second access point device is less than the second difference value, determine that the distance between the first controlled device and the terminal is less than the distance between the second controlled device and the terminal, send a first control instruction to the first controlled device, to instruct the first controlled device to provide a service for the terminal according to the first control instruction, and send a second control instruction to the second controlled device, to instruct the second controlled device to stop providing a service for the terminal according to the second control instruction.

The present invention provides a controlled device 100. As shown in FIG. 10, the controlled device 100 includes:
a processor (processor) 101, a communications interface (Communications Interface) 102, a memory (memory) 103, and a communications bus 104, where the processor 101, the communications interface 102, and the memory 103 communicate with each other by using the communications bus 104.

The processor 101 may be a central processing unit CPU, or an application-specific integrated circuit ASIC (Application Specific Integrated Circuit), or one or more integrated circuits configured to implement the embodiments of the present application.

The memory 103 is configured to store program code, where the program code includes a computer operation instruction. The memory 103 may include a high speed RAM memory, or may include a non-volatile memory (non-volatile memory), for example, at least one magnetic memory.

The communications interface 102 is configured to implement connection communication between the apparatuses.

The processor 101 executes the program code, and is configured to: receive a first radio signal sent by a first controlled device, determine a first signal strength according to the first radio signal, receive a second radio signal sent by a second controlled device, determine a second signal strength according to the second radio signal, and when it is determined, according to the first signal strength and the second signal strength, that a distance between the first controlled device and the terminal is less than a distance between the second controlled device and the terminal, control the first controlled device and the second controlled device.

Optionally, the processor 101 is further configured to: when it is determined that the first signal strength is greater than the second signal strength, determine that the distance between the first controlled device and the terminal is less than the distance between the second controlled device and the terminal, send a first control instruction to the first controlled device, to instruct the first controlled device to provide a service for the terminal according to the first control instruction, and send a second control instruction to the second controlled device, to instruct the second controlled device to stop providing a service for the terminal according to the second control instruction.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A device control method, comprising:
receiving, by a terminal, a radio signal sent by at least three access point devices;
determining corresponding at least three first signal strengths according to the radio signal sent by the three access point devices;
acquiring three second signal strengths, corresponding to the three access point devices, of a first controlled device and three third signal strengths, corresponding to the three access point devices, of a second controlled device; and
controlling the first controlled device and the second controlled device when determining, according to the three first signal strengths, the three second signal strengths, and the three third signal strengths, that a distance between the first controlled device and the terminal is less than a distance between the second controlled device and the terminal, wherein when determining that at least three first difference values between the three first signal strengths and the three second signal strengths are respectively less than three second difference values between the three first signal strengths and the three third signal strengths corresponding to the corresponding three access point devices, the terminal determines that the distance between the first controlled device and the terminal is less than the distance between the second controlled device and the terminal, and wherein the terminal and the first and second controlled devices are connected by using the at least three access point devices, wherein the at least three access point devices include a working access point device used for implementing network communication between the terminal and the controlled devices and at least two auxiliary access point devices used for providing a radio signal to determine the distance between the terminal and the controlled devices.

2. The method according to claim 1, wherein the acquiring the three second signal strengths, corresponding to the three access point devices, of a first controlled device and the three third signal strengths, corresponding to the three access point devices, of a second controlled device comprises:
sending a signal strength request instruction comprising three identifiers of the three access point devices to the first controlled device and the second controlled device, to instruct the first controlled device and the second controlled device to respectively send the three second signal strengths and the three third signal strengths that correspond to the three access point devices to the terminal according to the identifier; or,
sending a signal strength request instruction to the first controlled device and the second controlled device, to instruct the first controlled device and the second controlled device to respectively send detected three second signal strengths and three third signal strengths that correspond to the three access point devices to the terminal.

3. The method according to claim 2, wherein the controlling the first controlled device and the second controlled device when determining, according to the first difference value and the second difference value, that the distance between the first controlled device and the terminal is less than the distance between the second controlled device and the terminal comprises:
sending a first control instruction to the first controlled device, to instruct the first controlled device to provide a service for the terminal according to the first control instruction; and
sending a second control instruction to the second controlled device, to instruct the second controlled device to stop providing a service for the terminal according to the second control instruction.

4. A terminal, comprising:
an acquiring unit, configured to receive a radio signal sent by at least three access point devices; and
a processing unit, configured to determine corresponding at least three first signal strengths according to the radio signal sent by the three access point devices and obtained by the acquiring unit, wherein
the acquiring unit is further configured to acquire three second signal strengths, corresponding to the three access point devices, of a first controlled device and three third signal strengths, corresponding to the three access point devices, of a second controlled device; and
the processing unit is further configured to: when it is determined, according to the three first signal strengths, the three second signal strengths, and the three third signal strengths, that a distance between the first controlled device and the terminal is less than a distance between the second controlled device and the terminal, control the first controlled device and the second controlled device, wherein when determining that at least three first difference values between the three first signal strengths and the three second signal strengths are respectively less than three second difference values between the three first signal strengths and the three third signal strengths corresponding to the corresponding three access point devices, the terminal determines that the distance between the first controlled device and the terminal is less than the distance between the second controlled device and the terminal, and wherein the terminal and the first and second controlled devices are connected by using the at least three access point devices, wherein the at least three access point devices includes a working access point device used for implementing network communication between the terminal and the controlled devices and at least two auxiliary access point devices used for providing a radio signal to determine the distance between the terminal and the controlled devices.

5. The terminal according to claim 4, wherein the terminal further comprises:
a sending unit, configured to send a signal strength request instruction comprising an identifier of the three access point devices to the first controlled device and the second controlled device, to instruct the first controlled device and the second controlled device to respectively send the three second signal strengths and the three third signal strengths that correspond to the three access point devices to the terminal according to the identifier; or,
send a signal strength request instruction to the first controlled device and the second controlled device, to instruct the first controlled device and the second controlled device to respectively send detected three second signal strengths and three third signal strengths that correspond to the three access point devices to the terminal.

6. The terminal according to claim 5, wherein sending unit is further configured to send: a first control instruction to the first controlled device to instruct the first controlled device to provide a service for the terminal according to the first control instruction, and send a second instruction to the second controlled device to instruct the second controlled device to stop providing a service for the terminal according to the second control instruction.

7. A device control system, comprising at least three access point devices, a terminal according to one of the claims 4 to 6, a first controlled device, and a second controlled device.

8. A terminal, comprising a processor and a memory, wherein the memory stores a computer executable instruction, and the processor is connected to the memory by using a communications bus; and
when the terminal runs, the processor executes the computer executable instruction stored in the memory, so that the terminal executes the method according to any one of claims 1 to 3.

## Patentansprüche

1. Gerätesteuerungsverfahren, Folgendes umfassend:
Empfangen, durch ein Endgerät, eines Funksignals, das von mindestens drei Zugangspunktgeräten gesendet wird;
Bestimmen von mindestens drei entsprechenden ersten Signalstärken entsprechend dem von den drei Zugangspunktgeräten gesendeten Funksignal;
Erfassen von drei zweiten Signalstärken, die den drei Zugangspunktgeräten entsprechen, von einem ersten gesteuerten Gerät und drei dritten Signalstärken, die den drei Zugangspunktgeräten entsprechen, von einem zweiten gesteuerten Gerät; und
Steuern des ersten gesteuerten Geräts und des zweiten gesteuerten Geräts, wenn entsprechend den drei ersten Signalstärken, den drei zweiten Signalstärken und den drei dritten Signalstärken bestimmt wird, dass ein Abstand zwischen dem ersten gesteuerten Gerät und dem Endgerät kleiner als ein Abstand zwischen dem zweiten gesteuerten Gerät und dem Endgerät ist, wobei bei der Bestimmung, dass mindestens drei erste Differenzwerte zwischen den drei ersten Signalstärken und den drei zweiten Signalstärken jeweils kleiner als drei zweite Differenzwerte zwischen den drei ersten Signalstärken und den drei dritten Signalstärken entsprechend den entsprechenden drei Zugangspunktgeräten sind, das Endgerät bestimmt, dass der Abstand zwischen dem ersten gesteuerten Gerät und dem Endgerät kleiner als der Abstand zwischen dem zweiten gesteuerten Gerät und dem Endgerät ist, und wobei das Endgerät und die ersten und zweiten gesteuerten Geräte unter Verwendung der mindestens drei Zugangspunktgeräte verbunden sind, wobei die mindestens drei Zugangspunktgeräte ein Arbeitszugangspunktgerät, das zum Implementieren einer Netzwerkkommunikation zwischen dem Endgerät und den gesteuerten Geräten verwendet wird, und mindestens zwei Hilfszugangspunktgeräte umfassen, die zum Bereitstellen eines Funksignals verwendet werden, um den Abstand zwischen dem Endgerät und den gesteuerten Geräten zu bestimmen.

2. Verfahren nach Anspruch 1, wobei das Erfassen der drei zweiten Signalstärken, die den drei Zugangspunktgeräten entsprechen, eines ersten gesteuerten Geräts und der drei dritten Signalstärken, die den drei Zugangspunktgeräten entsprechen, eines zweiten gesteuerten Geräts Folgendes umfasst:
Senden eines Signalstärke-Anforderungsbefehls, umfassend drei Kennungen der drei Zugangspunktgeräte, an das erste gesteuerte Gerät und das zweite gesteuerte Gerät, um das erste gesteuerte Gerät und das zweite gesteuerte Gerät anzuweisen, jeweils die drei zweiten Signalstärken und die drei dritten Signalstärken, die den drei Zugangspunktgeräten entsprechen, entsprechend der Kennung an das Endgerät zu senden; oder,
Senden eines Signalstärke-Anforderungsbefehls an das erste gesteuerte Gerät und das zweite gesteuerte Gerät, um das erste gesteuerte Gerät und das zweite gesteuerte Gerät anzuweisen, jeweils drei erkannte zweite Signalstärken und drei dritte Signalstärken, die den drei Zugangspunktgeräten entsprechen, an das Endgerät zu senden.

3. Verfahren nach Anspruch 2, wobei das Steuern des ersten gesteuerten Geräts und des zweiten gesteuerten Geräts bei der Bestimmung gemäß dem ersten Differenzwert und dem zweiten Differenzwert, dass der Abstand zwischen dem ersten gesteuerten Gerät und dem Endgerät kleiner ist als der Abstand zwischen dem zweiten gesteuerten Gerät und dem Endgerät, Folgendes umfasst:
Senden eines ersten Steuerbefehls an das erste gesteuerte Gerät, um das erste gesteuerte Gerät anzuweisen, einen Dienst für das Endgerät gemäß dem ersten Steuerbefehl bereitzustellen; und
Senden eines zweiten Steuerbefehls an das zweite gesteuerte Gerät, um das zweite gesteuerte Gerät anzuweisen, die Bereitstellung eines Dienstes für das Endgerät gemäß dem zweiten Steuerbefehl zu beenden.

4. Endgerät, umfassend:
eine Erfassungseinheit, die dafür konfiguriert ist, ein von mindestens drei Zugangspunktgeräten gesendetes Funksignal zu empfangen; und
eine Verarbeitungseinheit, die dafür konfiguriert ist, entsprechende mindestens drei erste Signalstärken gemäß dem Funksignal zu bestimmen, das von den drei Zugangspunktgeräten gesendet und von der Erfassungseinheit erhalten wird,
wobei die Erfassungseinheit ferner dafür konfiguriert ist, drei zweite Signalstärken, die den drei Zugangspunktgeräten entsprechen, von einem ersten gesteuerten Gerät und drei dritte Signalstärken, die den drei Zugangspunktgeräten entsprechen, von einem zweiten gesteuerten Gerät zu erfassen; und
wobei die Verarbeitungseinheit ferner für Folgendes konfiguriert ist:
wenn entsprechend den drei ersten Signalstärken, den drei zweiten Signalstärken und den drei dritten Signalstärken bestimmt wird, dass ein Abstand zwischen dem ersten gesteuerten Gerät und dem Endgerät kleiner als ein Abstand zwischen dem zweiten gesteuerten Gerät und dem Endgerät ist, Steuern des ersten gesteuerten Geräts und des zweiten gesteuerten Geräts, wobei bei der Bestimmung, dass mindestens drei erste Differenzwerte zwischen den drei ersten Signalstärken und den drei zweiten Signalstärken jeweils kleiner als drei zweite Differenzwerte zwischen den drei ersten Signalstärken und den drei dritten Signalstärken sind, die den entsprechenden drei Zugangspunktgeräten entsprechen, das Endgerät bestimmt, dass der Abstand zwischen dem ersten gesteuerten Gerät und dem Endgerät geringer ist als der Abstand zwischen dem zweiten gesteuerten Gerät und dem Endgerät, und
wobei das Endgerät und das erste und zweite gesteuerte Gerät unter Verwendung der mindestens drei Zugangspunktgeräte verbunden sind, wobei die mindestens drei Zugangspunktgeräte ein Arbeitszugangspunktgerät, das zum Implementieren einer Netzwerkkommunikation zwischen dem Endgerät und den gesteuerten Geräten verwendet wird, und mindestens zwei Hilfszugangspunktgeräte, die zum Bereitstellen eines Funksignals verwendet werden, um den Abstand zwischen dem Endgerät und den gesteuerten Geräten zu bestimmen, umfassen.

5. Endgerät nach Anspruch 4, wobei das Endgerät ferner Folgendes umfasst:
eine Sendeeinheit, die für das Senden eines Signalstärke-Anforderungsbefehls konfiguriert ist, umfassend eine Kennung der drei Zugangspunktgeräte, an das erste gesteuerte Gerät und das zweite gesteuerte Gerät, um das erste gesteuerte Gerät und das zweite gesteuerte Gerät anzuweisen, jeweils die drei zweiten Signalstärken und die drei dritten Signalstärken, die den drei Zugangspunktgeräten entsprechen, entsprechend der Kennung an das Endgerät zu senden; oder,
Senden eines Signalstärke-Anforderungsbefehls an das erste gesteuerte Gerät und das zweite gesteuerte Gerät, um das erste gesteuerte Gerät und das zweite gesteuerte Gerät anzuweisen, jeweils drei erkannte zweite Signalstärken und
drei dritte Signalstärken, die den drei Zugangspunktgeräten entsprechen, an das Endgerät zu senden.

6. Endgerät nach Anspruch 5, wobei die Sendeeinheit ferner dafür konfiguriert ist, Folgendes zu senden:
einen ersten Steuerbefehl an das erste gesteuerte Gerät, um das erste gesteuerte Gerät anzuweisen, einen Dienst für das Endgerät gemäß dem ersten Steuerbefehl bereitzustellen, und einen zweiten Befehl an das zweite gesteuerte Gerät zu senden, um das zweite gesteuerte Gerät anzuweisen, die Bereitstellung eines Dienstes für das Endgerät gemäß dem zweiten Steuerbefehl zu beenden.

7. Gerätesteuerungssystem, umfassend mindestens drei Zugangspunktgeräte, ein Endgerät nach einem der Ansprüche 4 bis 6, ein erstes gesteuertes Gerät und ein zweites gesteuertes Gerät.

8. Endgerät, umfassend einen Prozessor und einen Speicher, wobei der Speicher einen computerausführbaren Befehl speichert und wobei der Prozessor unter Verwendung eines Kommunikationsbusses mit dem Speicher verbunden ist; und
wobei bei Betrieb des Endgeräts der Prozessor den im Speicher gespeicherten computerausführbaren Befehl ausführt, sodass das Endgerät das Verfahren nach einem der Ansprüche 1 bis 3 ausführt.

## Revendications

1. Procédé de commande de dispositif, comprenant :
la réception, par un terminal, d'un signal radio envoyé par au moins trois dispositifs de point d'accès ;
la détermination d'au moins trois premières intensités de signal correspondantes selon le signal radio envoyé par les trois dispositifs de point d'accès ;
l'acquisition des trois deuxièmes intensités de signal, correspondant aux trois dispositifs de point d'accès, d'un premier dispositif commandé et des trois troisièmes intensités de signal, correspondant aux trois dispositifs de point d'accès, d'un second dispositif commandé ; et
la commande du premier dispositif commandé et du second dispositif commandé lors de la détermination, selon les trois premières intensités de signal, les trois deuxièmes intensités de signal et les trois troisièmes intensités de signal, qu'une distance entre le premier dispositif commandé et le terminal est inférieure à une distance entre le second dispositif commandé et le terminal, dans lequel lors de la détermination qu'au moins trois premières valeurs de différence entre les trois premières intensités de signal et les trois deuxièmes intensités de signal sont respectivement inférieures à trois secondes valeurs de différence entre les trois premières intensités de signal et les trois troisièmes intensités de signal correspondant aux trois dispositifs de point d'accès correspondants, le terminal détermine que la distance entre le premier dispositif commandé et le terminal est inférieure à la distance entre le second dispositif commandé et le terminal, le terminal et les premier et second dispositifs commandés étant connectés en utilisant lesdits au moins trois accès dispositifs de point d'accès, lesdits au moins trois dispositifs de point d'accès comportant un dispositif de point d'accès fonctionnel destiné à mettre en œuvre une communication réseau entre le terminal et les dispositifs commandés et au moins deux dispositifs de point d'accès auxiliaires destinés à fournir un signal radio pour déterminer la distance entre le terminal et les dispositifs commandés.

2. Procédé selon la revendication 1, dans lequel l'acquisition des trois deuxièmes intensités de signal, correspondant aux trois dispositifs de point d'accès, d'un premier dispositif commandé et des trois troisièmes intensités de signal, correspondant aux trois dispositifs de point d'accès, d'un second dispositif commandé comprend :
l'envoi d'une instruction de demande d'intensité du signal comprenant trois identifiants des trois dispositifs de point d'accès au premier dispositif commandé et au second dispositif commandé, pour demander au premier dispositif commandé et au second dispositif commandé d'envoyer respectivement les trois deuxièmes intensités de signal et les trois troisièmes intensités de signal qui correspondent aux trois dispositifs de point d'accès au terminal selon l'identifiant ; ou,
l'envoi d'une instruction de demande d'intensité du signal au premier dispositif commandé et au second dispositif commandé, pour demander au premier dispositif commandé et au second dispositif commandé d'envoyer respectivement trois deuxièmes intensités de signal détectées et trois troisièmes intensités de signal qui correspondent aux trois dispositifs de point d'accès au terminal.

3. Procédé selon la revendication 2, dans lequel la commande du premier dispositif commandé et du second dispositif commandé lors de la détermination, selon la première valeur de différence et la seconde valeur de différence, que la distance entre le premier dispositif commandé et le terminal est inférieure à la distance entre le second dispositif commandé et le terminal comprend :
l'envoi d'une première instruction de commande au premier dispositif commandé, pour demander au premier dispositif commandé de fournir un service au terminal selon la première instruction de commande ; et
l'envoi d'une seconde instruction de commande au second dispositif commandé, pour demander au second dispositif commandé d'arrêter de fournir un service au terminal selon la seconde instruction de commande.

4. Terminal, comprenant :
une unité d'acquisition, configurée pour recevoir un signal radio envoyé par au moins trois dispositifs de point d'accès ; et
une unité de traitement, configurée pour déterminer au moins trois premières intensités de signal correspondantes selon le signal radio envoyé par les trois dispositifs de point d'accès et obtenu par l'unité d'acquisition, l'unité d'acquisition étant configurée en outre pour acquérir trois deuxièmes intensités de signal, correspondant aux trois dispositifs de point d'accès, d'un premier dispositif commandé et trois troisièmes intensités de signal, correspondant aux trois dispositifs de point d'accès, d'un second dispositif commandé ; et
l'unité de traitement est configurée en outre pour :
lorsqu'il est déterminé, selon les trois premières intensités de signal, les trois deuxièmes intensités de signal et les trois troisièmes intensités de signal, qu'une distance entre le premier dispositif commandé et le terminal est inférieure à une distance entre le second dispositif commandé et le terminal, commander le premier dispositif commandé et le second dispositif commandé, dans lequel, lors de la détermination qu'au moins trois premières valeurs de différence entre les trois premières intensités de signal et les trois deuxièmes intensités de signal sont respectivement inférieures à trois secondes valeurs de différence entre les trois premières intensités de signal et les trois troisièmes intensités de signal correspondant aux trois dispositifs de point d'accès correspondants, le terminal détermine que la distance entre le premier dispositif commandé et le terminal est inférieure à la distance entre le second dispositif commandé et le terminal, le terminal et les premier et second dispositifs commandés étant connectés en utilisant lesdits au moins trois dispositifs de point d'accès, lesdits au moins trois dispositifs de point d'accès comportant un dispositif de point d'accès fonctionnel destiné à mettre en œuvre une communication réseau entre le terminal et les dispositifs commandés et au moins deux dispositifs de point d'accès auxiliaires destinés à fournir un signal radio pour déterminer la distance entre le terminal et les dispositifs commandés.

5. Terminal selon la revendication 4, dans lequel, le terminal comprend en outre :
une unité d'envoi, configurée pour envoyer une instruction de demande d'intensité du signal comprenant un identifiant des trois dispositifs de point d'accès au premier dispositif commandé et au second dispositif commandé, pour demander au premier dispositif commandé et au second dispositif commandé d'envoyer respectivement les trois deuxièmes intensités de signal et les trois troisièmes intensités de signal qui correspondent aux trois dispositifs de point d'accès au terminal selon l'identifiant ; ou,
d'envoyer une instruction de demande d'intensité du signal au premier dispositif commandé et au second dispositif commandé, pour demander au premier dispositif commandé et au second dispositif commandé d'envoyer respectivement trois deuxièmes intensités de signal détectées et trois troisièmes intensités de signal qui correspondent aux trois dispositifs de point d'accès au terminal.

6. Terminal selon la revendication 5, dans lequel l'unité d'envoi est configurée en outre pour envoyer:
une première instruction de commande au premier dispositif commandé pour demander au premier dispositif commandé de fournir un service au terminal selon la première instruction de commande et envoyer une seconde instruction au second dispositif commandé pour demander au second dispositif commandé d'arrêter de fournir un service pour le terminal selon la seconde instruction de commande.

7. Système de commande de dispositif, comprenant au moins trois dispositifs de point d'accès, un terminal selon l'une des revendications 4 à 6, un premier dispositif commandé et un second dispositif commandé.

8. Terminal, comprenant un processeur et une mémoire, dans lequel la mémoire stocke une instruction exécutable par ordinateur et le processeur est connecté à la mémoire en utilisant un bus de communication ; et
lorsque le terminal s'exécute, le processeur exécute l'instruction exécutable par l'ordinateur stockée dans la mémoire, de manière à ce que le terminal exécute le procédé selon l'une quelconque des revendications 1 à 3.
